# EUROPEAN PATENT APPLICATION

(11) **EP 2 942 213 A1**
(43) Date of publication of application: **11.11.2015**
(21) Application number: 14167054.7
(22) Date of filing: 05.05.2014
(51) Int. Cl.: B60D 1/06, B60R 9/10

(54) **"Coupling device for a motor-vehicle tow hitch"**

(71) Applicant: Pedrini, Fabio, 40033 Bologna (IT)
(72) Inventor: Pedrini, Fabio, 40033 Bologna (IT)
(74) Representative: Notaro, Giancarlo

(57) **Abstract**

A bicycle-carrying device (6) is mounted on the tow hitch (2) of a motor-vehicle by means of a coupling device (10) which includes a sleeve (11) rigidly connected to the structure (5) of the bicycle-carrying device (6). The sleeve (11) has an inner surface including an engaging portion (113) which is placed over the ball (4) of the tow hitch (2). A clamping ring (12) is pre-arranged below the ball (4) and is tightened on the sleeve (11) to lock the sleeve in the engaging condition on the ball (4). In the tightened condition of the clamping ring (12) on the sleeve (11), a locking member (13) arranged within the clamping ring (12) is axially compressed between the clamping ring (12) and the ball (4), so that in this condition the sleeve (11) is locked on the ball (4).

## Description

### Field of the invention

The present invention relates to a coupling device which can be clamped over a ball of a motor-vehicle tow hitch, for mounting a bicycle carrier or other load-carrying structure on the motor-vehicle.

### Prior art

Various types of coupling devices have been proposed and used in the past in order to clamp a motor-vehicle tow ball. See for example documents FR 2 684 056 A1, EP 1 170 178 A2, DE 197 16 670 A1, DE 940 42 36 U1, DE 930 35 10 U1, DE 89 001 84 U1, DE 87 099 12 U1.

Document EP 0 666 197 A1 discloses a coupling device comprising a sleeve having an inner surface including a ball engaging portion having a diameter lower than the diameter of the ball. The device is provided with means for locking the sleeve in this ball engaging position. The drawback of this known solution is that it does not ensure a reliable locking, particularly with reference to possible tilting movements of the sleeve axis with respect to the vertical axis of the ball.

### Object of the invention

The object of the present invention is that of providing a coupling device of the above indicated type which has an extremely simple and inexpensive structure, and at the same time ensures a high degree of reliability and safety in the locking function.

### Summary of the invention

In view of achieving the above indicated object, the present invention provides a coupling device adapted to be clamped over a ball of a motor-vehicle tow hitch, for mounting a bicycle carrier or other load-carrying structure on a motor-vehicle, said coupling device comprising a sleeve having an inner surface including a ball engaging portion having a diameter lower than the diameter of the ball, said sleeve being adapted to be locked in this engagement condition over the ball, wherein the coupling device is characterized in that it further comprises a clamping ring having a central aperture with a diameter greater than the diameter of the ball and including a threaded portion engageable over a corresponding threaded portion associated with said sleeve, to clamp the sleeve in the engagement condition over the ball, and a locking member which in the tightened condition of the clamping ring over said threaded portion associated with said sleeve is compressed axially between said clamping ring and said ball, so that in this condition the sleeve is locked over the ball.

The sleeve forming part of the coupling device according to the invention is rigidly connected to the frame of a bicycle carrier or other load-carrying structure. The bicycle carrier can be mounted on the motor-vehicle by initially arranging the clamping ring with the associated locking member on the motor-vehicle hitch, below the tow ball. The carrier must then be held so that the sleeve engages over the tow ball and is locked in this position by tightening the clamping ring on the sleeve, with the locking member interposed between the ring and the ball.

According to a further preferred feature of the invention, the portion of the inner surface of the sleeve which engages the ball is dimensioned to come in contact with a circumferential portion of the ball surface which is spaced from the horizontal plane passing through the centre of the ball by an angle α having a value between 5° and 25°. This ensures a safe and reliable locking of the sleeve on the ball, with no risk of a tilting movement of the sleeve axis with respect to the vertical axis of the ball.

The invention is also directed to a bicycle carrying device or other load-carrying device incorporating the above described coupling device.

### Brief description of the drawings

Further features and advantages of the invention will become apparent from the description which follows with reference to the annexed drawings, given purely by way of non-limiting example, in which:
- figure 1 is a perspective view of a motor-vehicle provided with a first example of a bicycle-carrying device including a coupling device according to the invention,
- figure 2 is a partial side view of the motor-vehicle of figure 1,
- figure 3 is a partial perspective view at an enlarged scale of the bicycle-carrying device of figures 1, 2,
- figure 4 is a perspective view at an enlarged scale of a detail of figure 3, which shows the coupling device according to a preferred embodiment of the invention,
- figure 5 is a cross-sectioned perspective view of the coupling device of figure 4,
- figure 6 is a cross-sectional view of the coupling device of figure 4,
- figure 7 is an exploded perspective view of the coupling device of figures 4-7, and
- figures 8, 9 are a perspective view and a side view of a motor-vehicle provided with a second example of a bicycle-carrying device according to the invention.

### Detailed description of the preferred embodiments of the invention

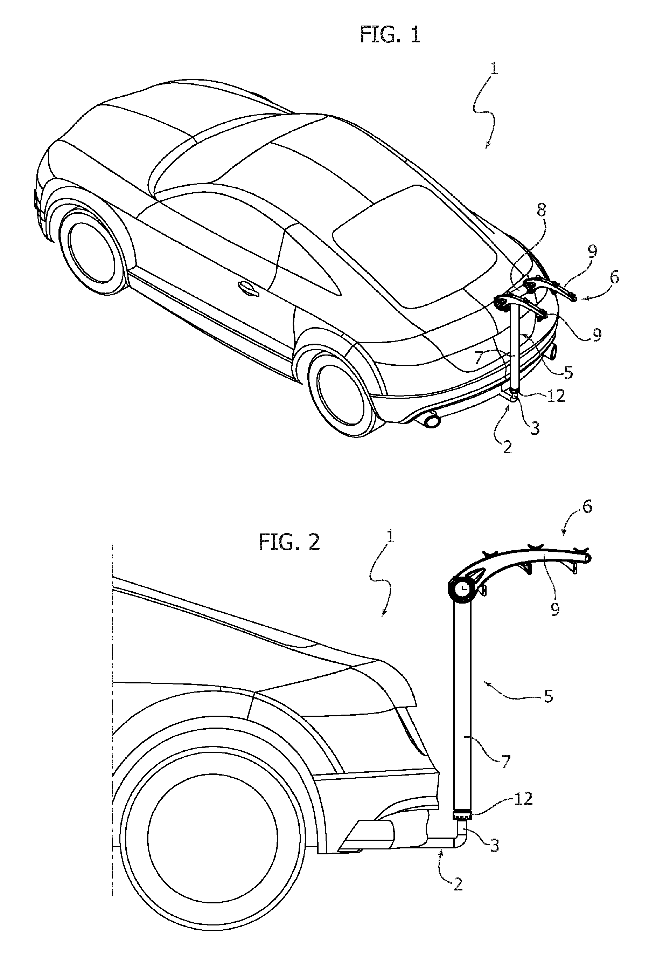

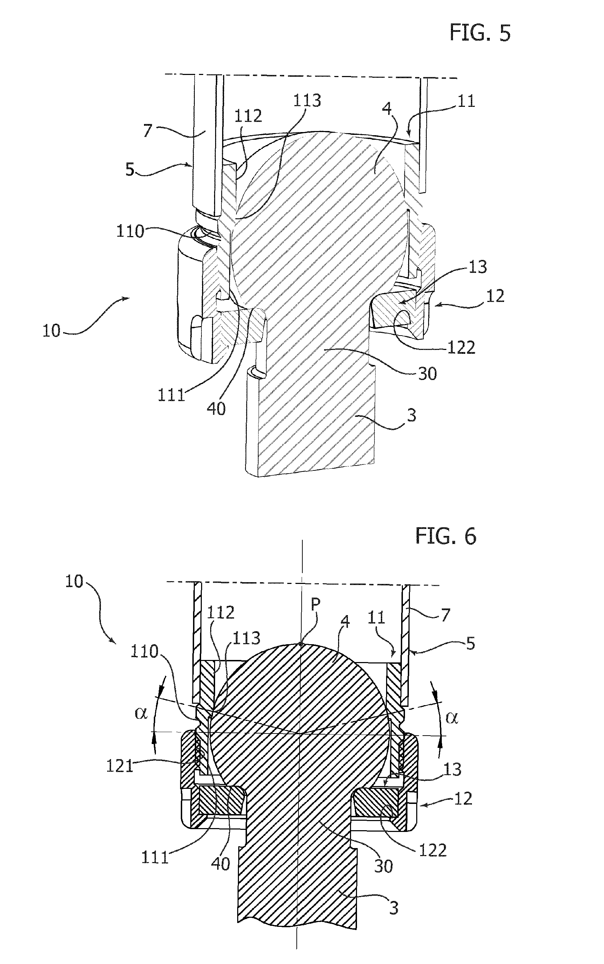

In figures 1, 2, reference numeral 1 generally designates a motor-vehicle provided with a tow hitch 2 of a conventional type, comprising an L-shaped element having one end anchored to the motor-vehicle structure and a vertical stem 3 carrying a coupling ball 4 (shown in figures 5-7).

The structure 5 of the bicycle-carrying device 6 can be anchored to the ball of the tow hitch 2 by means of the coupling device according to the invention.

Figures 1-3 show one example of a bicycle-carrying device 6, whose structure 5 includes a vertical upright 7 in form of a tube with circular cross-section, whose upper end carries a cross-member 8. The ends of cross-member 8 carry two cantilever arms 9 provided with upper seats for receiving the upper horizontal tubes of the frames of a number of bicycles arranged transversally with respect to the longitudinal direction of the motor-vehicle. In the case of the specific illustrated example, in accordance to a solution shown in document EP 0 671 295 A1 of the same applicant, the two supporting arms 9 are connected to cross-member 8 by fluted couplings which enable the arms 9 to be assembled on cross-member 8 in different angular positions, selectively. This specific features of the bicycle-carrying device 6 are however here indicated purely by way of example, since the coupling device according to the invention can be applied to any type of structure of bicycle carrier adapted to be connected to the motor-vehicle tow hitch.

For this same reason, the details of construction of the bicycle-carrying device 6 are not described nor shown herein, since they can be made in any known way and they do not fall, taken alone, within the scope of the present invention.

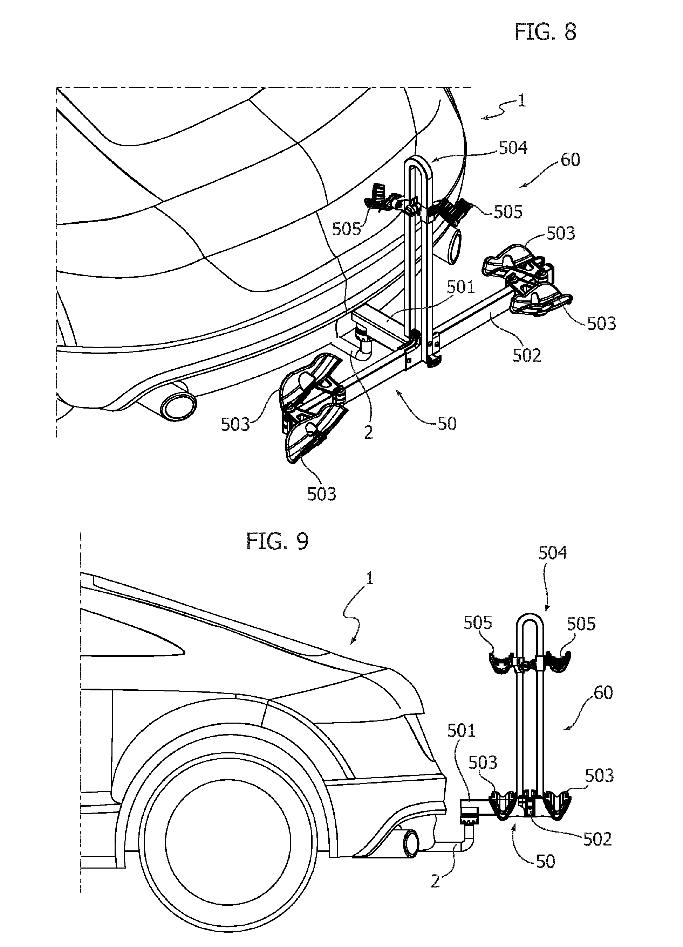

By way of further example, figures 8, 9 of the annexed drawings show a different type of bicycle-carrying device 60 whose structure 50 is anchored to a tow hitch 2 by the coupling device according to the invention. In the case of figures 8, 9, structure 50 comprises a T-shaped frame having a horizontal element 501 having one end connected to the ball of the tow hitch by the coupling device according to the invention. The opposite end of element 501 carries a cross-member 502 provided with orientable cradles 503 provided for receiving and supporting the front and rear wheels of two bicycles. On cross-member 502 there is mounted an upright 504 having an inverted U-shape with two vertical runs which carry further cradles 505 for receiving the tubes of the frames of the bicycles. The general configuration of the bicycle-carrying device of figures 8, 9 is known from document US 2013 062385 A1 of the same applicant. With respect to the example of figures 1, 2, the bicycle-carrying device 60 has the advantage that the upright 504 can be tilted around a lower articulation to cross-member 502 so that it can assume a lowered horizontal position. This enables the user to open the rear bonnet of the motor-vehicle without the need of removing the bicycle-carrying device, when this is empty.

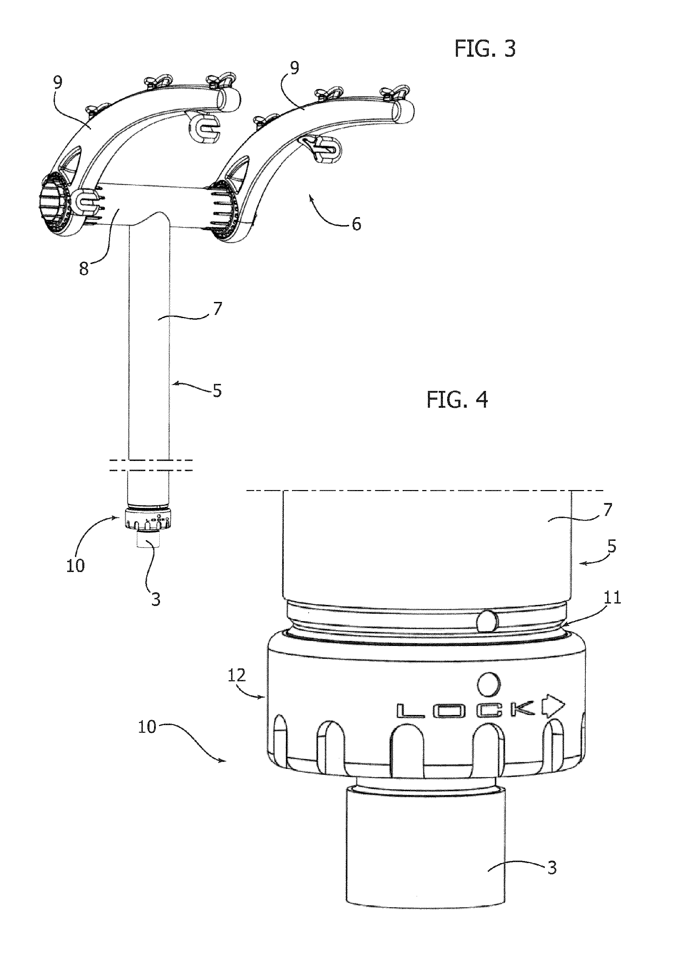

With reference to figures 4-7, the structure and operation of a preferred embodiment of the coupling device according to the invention will be now described.

The coupling device is generally designated by reference numeral 10. It comprises a sleeve 11 rigidly connected to the structure of the bicycle-carrying device.

In the case of the embodiment of figures 1-3, the sleeve 11 has its upper end welded inside the lower end of the upright 7 of the bicycle-carrying device 6. In the case of the embodiment of figures 8, 9, the sleeve 11 is rigidly connected to one end of element 501 of the frame of the bicycle-carrying device 60.

The sleeve 11 has a cylindrical shape and an outer surface having a lower threaded portion 110 (in the present description, the terms "lower" and "upper" are used with reference to the vertical position of sleeve 11 in the condition of use). The inner surface of sleeve 11 has a lower portion 111 having a diameter greater than the diameter of the tow hitch ball 4 and an upper portion 112 having a diameter lower than the diameter of ball 4. A portion 113 of the inner surface of sleeve 11 connects the lower portion 111 to the upper portion 112 and defines a portion for engaging the ball 4 directly (as in the illustrated example) or also indirectly (for example with the interposition of a coating layer on the inner surface of sleeve 11).

The coupling device 10 further comprises a clamping ring 12 having a central aperture 120 with a diameter greater than the diameter of ball 4, so that ring 12 can be pre-arranged around stem 3, below ball 4. The inner surface of ring 12 has a threaded portion 121 for engagement of the threaded portion 110 of sleeve 11. Furthermore, at its lower end (with reference to the drawings) the inner surface of ring 12 defines an annular planar supporting surface 122, for supporting a locking member 13.

The locking member 13 has a U-shaped general configuration, with an outer surface 131 having a substantially cylindrical shape and a diameter sufficiently small to be received within the clamping ring 12, against the planar supporting surface 122. The U-shaped body of the locking member 13 has two opposite planar faces 133. One of these faces is in contact with the planar supporting surface 122 of the clamping ring 12, whereas the opposite face is adapted to come in contact with an annular planar abutment surface 40 formed in the lower part of the body of ball 4, adjacent to an end portion 30 of stem 3, which in the illustrated example has a reduced diameter.

In the illustrated embodiment, the inner surface of the locking member 13 is a substantially conical surface, tapered upwardly (with reference to figures 5, 6) and connected to the upper face 133 of locking member 13 by a rounded edge. This configuration makes insertion of the locking member 13 under ball 4 and within ring 12 easier even when the vertical stem 3 has a reduced length. In this case, the member 13 can be inserted under ball 4 and within the ring 12 by initially holding the ring inclined with respect to the horizontal plane. However, the inner surface of the locking member 13 could be also cylindrical or in any case not tapered, and without any connecting rounded edge.

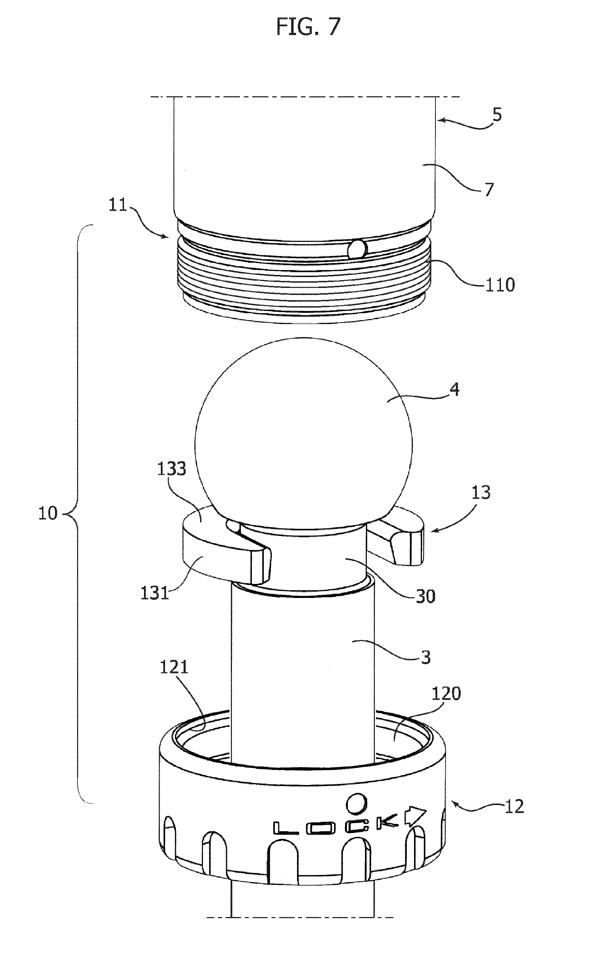

When the coupling device must be connected to ball 4, clamping ring 120 is arranged around stem 3, below ball 4, as shown in figure 7. In this condition, with clamping ring 12 still spaced apart from ball 4, the U-shaped locking member 13 is mounted around the terminal portion 30 of stem 3, immediately under the ball 4. With the locking member 13 in this position, the clamping ring 12 is moved closer to the ball 4 so as to receive the locking member 13 therein. When the clamping ring 12 with the locking member 13 associated therewith have been arranged under the ball 4, the bicycle-carrying device can be placed on the tow hitch by engaging portion 113 of the inner surface of sleeve 11 over the ball 4. The bicycle-carrying device must be held in this position while the clamping ring 12 is tightened over sleeve 11. When clamped, the locking member 13 is axially compressed between the supporting surface 122 of the clamping ring 12 and the abutment surface 40 of ball 4, so that in this condition sleeve 11 is locked over ball 4.

As shown in figure 7, clamping ring 12 has an outer shaped surface adapted to enable engagement of a wrench by which the user can easily apply a high clamping torque to clamping ring 12.

As shown in figure 6, in the preferred embodiment of the invention, the diameter of portion 113 of the inner surface of sleeve 11 which engages ball 4 is only slightly lower than the diameter of ball 4, so that the engaging portion 113 is in contact with a circumferential portion of the ball surface which is spaced from top P (figure 6) of ball by an angle greater than 45°.

More precisely, according to the invention the engaging portion 113 is in contact with a circumferential portion of the ball surface which is spaced from the horizontal plane passing through the centre of the ball by an angle α having a value between 5° and 25° (see figure 6). This measure ensures maximum reliability and safety in locking and in particular avoids any risk of a tilting movement of the axis of sleeve 11 with respect to the vertical axis of the ball and stem 3. In an actual embodiment, angle α was 15°.

In the preferred embodiment, all the elements constituting the coupling device are made of steel.

Naturally, while the principle of the invention remains the same, the details of construction and the embodiments may widely vary with respect to what has been described and illustrated by way of example, without departing from the scope of the present invention.

For example, locking member 13 could have a shape different from that presented in the foregoing description. For example, it could be made of a ring formed by two C-shaped elements which are connected to each other below the ball, such as by an interference fit between cooperating surfaces. The clamping ring could engage a threaded portion on the inner surface of the sleeve, rather than on the outer surface thereof. The sleeve could be constituted by a multi-component member formed by more elements associated with each other.

Furthermore, the bicycle-carrying device could have a shape also completely different from the two illustrated examples, while it is understood that it must comprise a frame to which the sleeve 11 is rigidly connected. The coupling device of the invention could be used for anchoring any other type of load-carrying device onto the motor-vehicle tow ball, not necessarily only a bicycle carrier.

## Claims

1. Coupling device adapted to be clamped over a ball (4) of a motor-vehicle tow hitch (2), for mounting a bicycle-carrier (6; 60) or any other load-carrying structure on the motor-vehicle,
said device comprising a sleeve (11) having an inner surface including a ball engaging portion (113) having a diameter lower than the diameter of the ball (4), said sleeve (11) being adapted to be locked in this engagement condition over the ball (4),
said device being **characterized in that** it further comprises:
a clamping ring (12) having a central aperture (120) with a diameter greater than the diameter of said ball (4) and including a threaded portion (121) engageable on a cooperating threaded portion (110) associated with said sleeve (11) for clamping the sleeve in the engagement condition over the ball (4), and
a locking member (13) which, in the tightened condition of the clamping ring (13) on said threaded portion (110) associated with said sleeve, is axially compressed between said clamping ring (12) and said ball (4), so that in this condition the sleeve (11) is locked on the ball (4).

2. Coupling device according to claim 1, **characterized in that** the portion (113) of the inner surface of the sleeve (11) which engages the ball (4) is in contact with a circumferential portion of the surface of the ball (4) which is spaced apart from the horizontal plane passing through the centre of the ball by an angle α having a value between 5° and 25°.

3. Coupling device according to claim 1 or 2, **characterized in that** said ball (4) is carried at the end of a supporting stem (3) and that said locking member (12) has a U-shaped configuration such that it can be mounted astride a ball supporting stem (3), said U-shaped locking member (13) having sufficiently small dimensions to be received inside said clamping ring (12).

4. Coupling device according to claim 3, **characterized in that** said U-shaped member has two opposite planar faces (133) engaging a planar supporting surface (122) defined inside the clamping ring (12) and a planar abutment surface (40) defined on one side of the ball (4), adjacent to said ball supporting stem (3), respectively.

5. Coupling device according to claim 4, **characterized in that** the locking member (13) has an upwardly tapered inner surface, with reference to its position of use.

6. Coupling device according to claim 4 or 5, **characterized in that** the inner surface of the locking member (13) is connected by a rounded edge to the face of the locking member which faces upwardly in the position of use.

7. Coupling device according to claim 4, **characterized in that** the outer surface of the locking member (13) is a substantially cylindrical surface.

8. Coupling device according to claim 1, **characterized in that** the clamping ring (12) has an outer surface shaped for engagement by a wrench.

9. Bicycle-carrying device, **characterized in that** it comprises a coupling device according to one or more of claims 1-8.
